# EUROPEAN PATENT APPLICATION

(11) **EP 3 119 077 A1**
(43) Date of publication of application: **18.01.2017**
(21) Application number: 15177271.2
(22) Date of filing: 17.07.2015
(51) Int. Cl.: H04N 5/232, H04N 5/225, H04N 7/18, G08B 13/196

(54) **DYNAMIC TRACKING DEVICE**

(71) Applicant: Amaryllo International B.V., 302 Zhubei City (TW)
(72) Inventor: Yang, Chao-Tung, Zhubei City (TW)
(74) Representative: Wright, Howard Hugh Burnby

(57) **Abstract**

A standalone dynamic tracking device is provided. The aforementioned dynamic tracking device includes a video recording module, a plurality of sensors, a rotating module, and a controller in an embedded system. The controller is connected to the video recording module, the rotating module, and the sensors. The controller compares the video image to determine the rotation direction of the camera without an aid from remote computers, making it a standalone tracking device. The controller further configures the rotation direction of the video recording module according to the feedback of the sensing results provided by at least one of the sensors. If one of the sensors detects activities, detection information will be provided to the controller to steer the rotating module to the location of the sensor. Therefore, the tracking device is able to dynamically monitor environment with the aid of the sensor feedback and automatically record all activities without having to implement multiple recording devices. Unlike conventional tracking systems that require multiple cameras linked to remote super computers to perform tracking algorithm to steer cameras. The proposed tracking device is a complete standalone tracking device.

## Description

### BACKGROUND OF THE INVENTION

### 1. Field of the invention

The present invention is related to a standalone video tracking device. More particularly, the present invention is related to a standalone video tracking device with embedded operation systems and computation power to perform tracking objects by analyzing the changes of the image pixel changes and the detection results of the associated sensors without an aid of remote computers.

### 2. Description of the prior art

Conventional video tracking systems mainly use the following technical methods to monitor real-time moving objects:
Method 1: The most common solution is to install as many cameras as needed to cover the entire area ensuing no blind spot. This is well seen in most of the commercial buildings, public facilities, public transportation, private offices, and some residential houses, etc. The issue with this simple solution is the high cost and tedious effort to set up a large number of cameras. Furthermore, because of a large video contents are recorded, a huge video storage and complicated wiring are needed. A central control room with human operators may be needed if real-time tracking is required.
Method 2: A better solution is to connect the above cameras to a super computer to compare video image frame-by-frame to see if there is any movement or change on the video pixels of each camera. If there is any pixel change, super computer will analyze and provides directional instructions to guide the camera to track the moving objects. The issue with this solution is that the super computer will become more and more expensive as the number of the cameras is increased to the point that the surveillance system is too expensive to be afforded. In no cases that this type of auto-tracking system which requires a supercomputer to work with multiple remote cameras is suitable for residential application where cost is the main factor.

In summary, conventional video tracking systems demands a lot of human resources and equipment expenses to achieve the purpose of real-time tracking operations. Accordingly, an affordable tracking device which can automatically execute real-time tracking operation is a technical issue needed to be solved in this technical field.

### SUMMARY OF THE INVENTION

To solve the previous technical problems, one objective of the present application is to provide a real-time tracking device with embedded operation systems and computation power to execute live tracking operations.

To achieve the aforementioned objective, the present application provides a dynamic tracking device. The device comprises a video recording module, a plurality of sensors, and a controller. The controller is connected with the video recording module and the sensors. The controller further analyzes and provides directional instructions to guide the motors of the cameras to the desired direction where the movement was found based on the detection data of the sensors. The detection data of the sensors could be the results of audio, light, body temperature, smoke, chemical components, etc. The device may be equipped with infrared (IR) LED lights such that it can continue performing real-time night-vision tracking. The sensors which are located on the sides or back of the device further provides detection information to the controller so the camera can turn to the back if the back sensors detect movement or audio.

In summary, comparing against conventional tracking techniques which adjust the camera direction either by manual operations or by image recognition of super computers, the dynamic tracking device of present application automatically adjusts the camera direction by the detection results of the sensors as to achieve the purpose the real-time dynamic tracking operation. It significantly saves the cost of having human eyeballs to monitor videos, which is unreliable. It also saves a huge hardware cost to build up a super computer to analyze possible multiple cameras pixel changes simultaneously. In other words, the proposed solution not only avoids the error-prone human operations but also reduces the equipment cost of super-fast computers to perform real-time video monitoring. By adding multiple sensors around the device, a low-cost camera with associated sensors will be able to perform real-time 360-degree tracking even the found area is on the back of the camera.

### BRIEF DESCRIPTION OF THE DRAWINGS

For a better understanding of the aforementioned embodiments of the invention as well as additional embodiments thereof, reference should be made to the Description of Embodiments below in conjunction with the following drawings in which like reference numerals refer to the corresponding parts throughout the figures.
Fig. 1 shows a block diagram of the dynamic tracking device of the first embodiment of present application.
Fig. 2 shows a block diagram of the dynamic tracking device of the second embodiment of present application.
Fig. 3 shows a perspective view of the dynamic tracking device of the second embodiment of present application.
Fig. 4 shows a perspective left view of the dynamic tracking device of the second embodiment of present application.
Fig. 5 shows a perspective right view of the dynamic tracking device of the second embodiment of present application.
Fig. 6 shows a sensing range and sensing direction of the sensors of the dynamic tracking device of the second embodiment of present application.
Fig. 7 shows an operation schematic diagram of the dynamic tracking device of the second embodiment of present application.
Fig. 8 shows a monitored environment diagram of the dynamic tracking device of the third embodiment of present application.
Fig. 9 shows a camera image diagram of the dynamic tracking device of the forth embodiment of present application.
Fig. 10 shows a camera image diagram of the dynamic tracking device of the fifth embodiment of present application.

### DETAILED DESCRIPTION OF THE PREFERRED EMBODIMENT

The following description is about embodiments of the present invention; however it is not intended to limit the scope of the present invention.

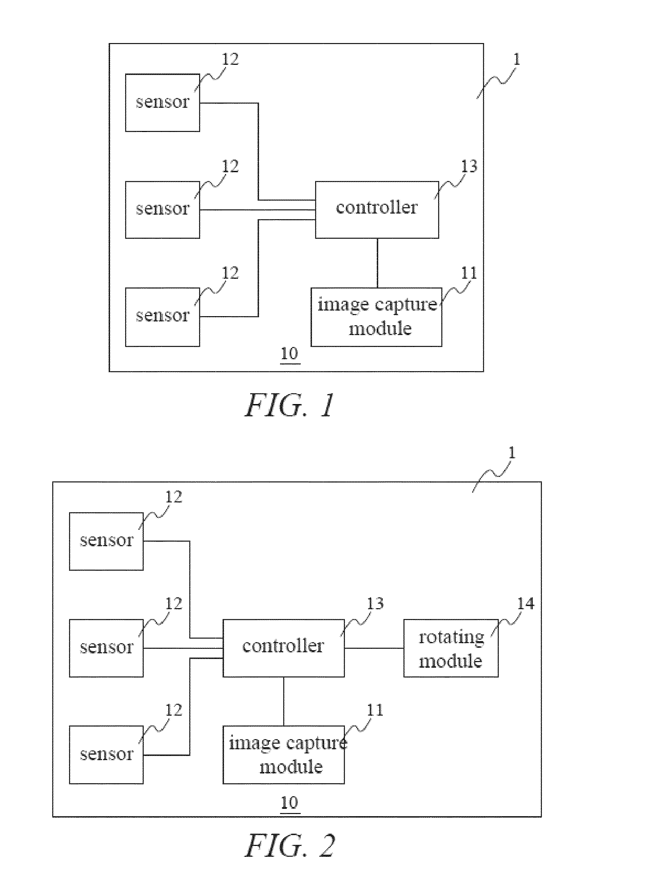

Fig. 1 shows a block diagram of the first embodiment of present application. The dynamic tracking device 1 comprises a body 10, a video recording module 11, a plurality of sensors, and a controller 13. The controller 13 configured a standalone embedded operation system with computation power and connected with the video recording module 11 and sensors 12. The controller 13 performs tracking task according to sensing results fed by at least one of the sensors 12 to configure a rotation direction of the video recording module. The controller can be implemented by programmable digital circuit or microprocessor. The video recording module comprises a camera and driver thereof.

Fig. 2 shows a block diagram of the second embodiment of present application. The second embodiment is similar with the first embodiment; however the difference is that the second embodiment further comprises a rotating module 14. The rotating module 14 is connected with the controller 13 and provides the controller configured thereof rotating according to the rotation direction. In this embodiment, the video recording module 11 is fixedly connected with body 10, and the rotating module 14 is actively connected with the body 10 so as to provide the rotating module 14 to rotate the body 10 and video recording module 11.

Present application further provides another one embodiment. Present embodiment is similar with the first embodiment; however the difference is that present embodiment further comprises a rotor which is electrically connected with the controller 11, fixedly connected with the body 10, and actively connected with the video recording module 11 so as to provide the controller 13 enabling the video recording module to rotate according to the rotation direction.

Present application further provides another one embodiment. Present embodiment is similar with the first embodiment; however the difference is that present embodiment further comprises a rotor which is electrically connected with controller 13, fixedly connected with the video recording module 11 and actively connected with the body 10 so as to provide controller 13 based on the rotation direction to enable the video recording module 11 rotating with respect to the body 10.

The aforementioned sensors 12 can be selected from infrared sensor, ultrasonic sensor, smoke sensor, sonic receiving sensor (e.g. microphone), radio signal sensor, thermal sensor ··· etc. However the type of the sensor is not limited by aforementioned examples. The structure of body 10 can be selected form sphere structure, approximate sphere structure, cylinder structure, approximate cylinder structure, or multi plane structure to provide at least one setting surface. The setting surface faces to at least one direction so as to provide at least one sensing range having at least one dimension. The structure of the body 10 is not limited by aforementioned description.

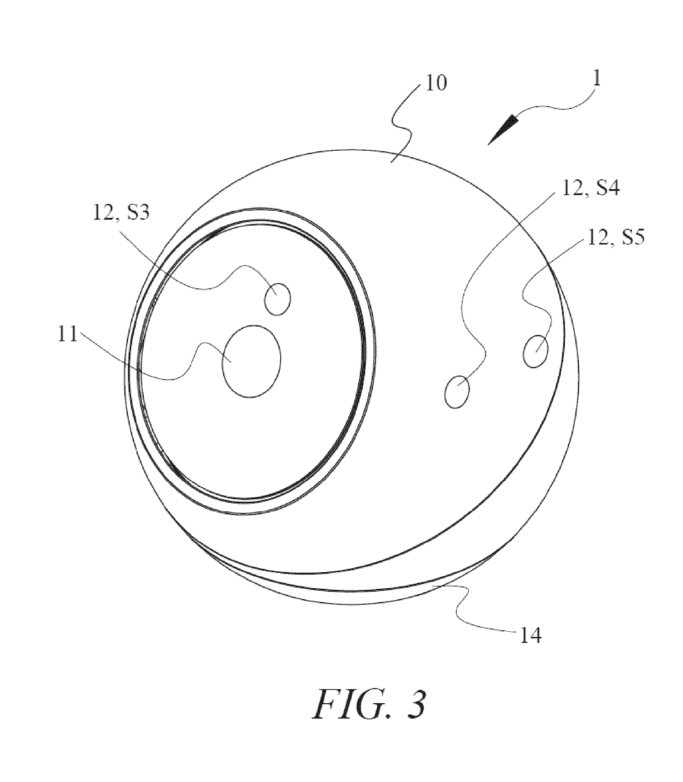

Fig. 3 shows a perspective view of the dynamic tracking device 1 of the second embodiment. In this embodiment, the aforementioned sensors 12 are embedded on the body 10. Wherein portion of the body 10 is approximate sphere structure, and rotating module 14 is configured at one end of the body 10 (bottom end) to provide at least one dimension rotation (turning left, turning right, turning up, and turning down). The one portion of the body 10 is formed a plane, and the video recording module 11 is embedded on the plane. The sensors 12 can be embedded on the curved surface of the approximate sphere or the plane according to the sensing requirement. The aforementioned rotating module 14 is a motor device.

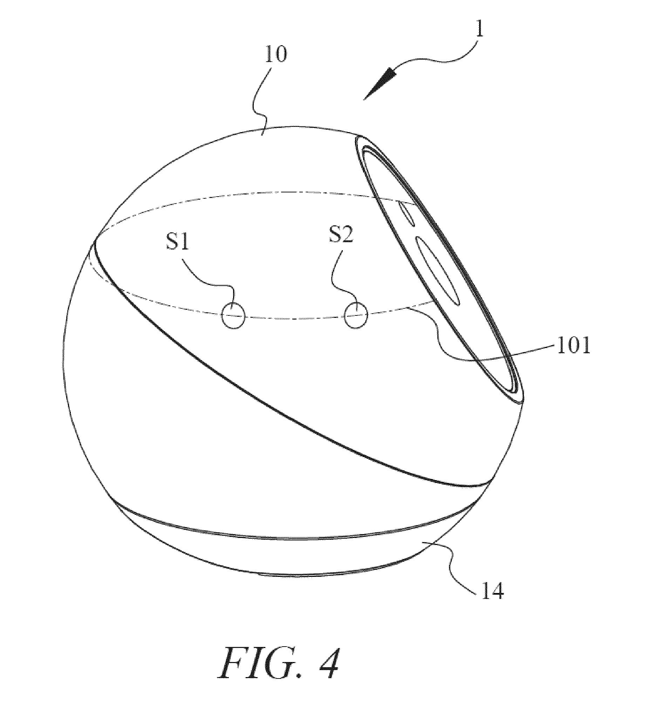

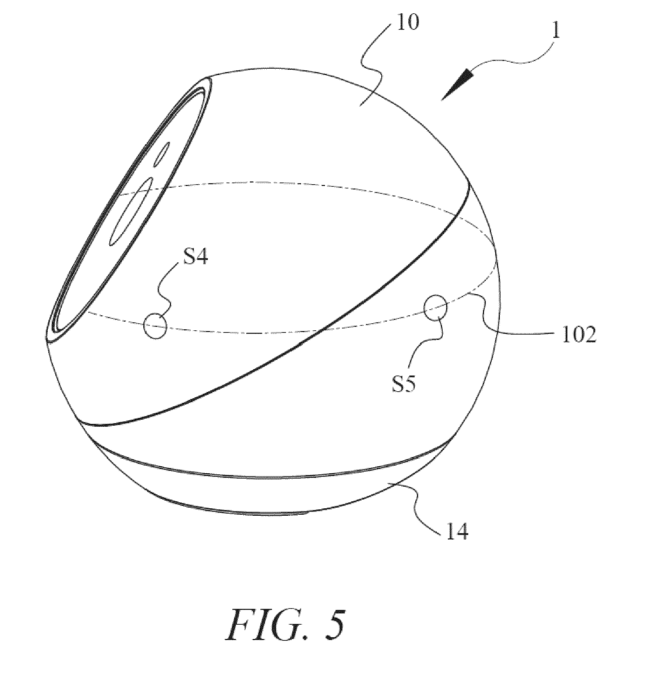

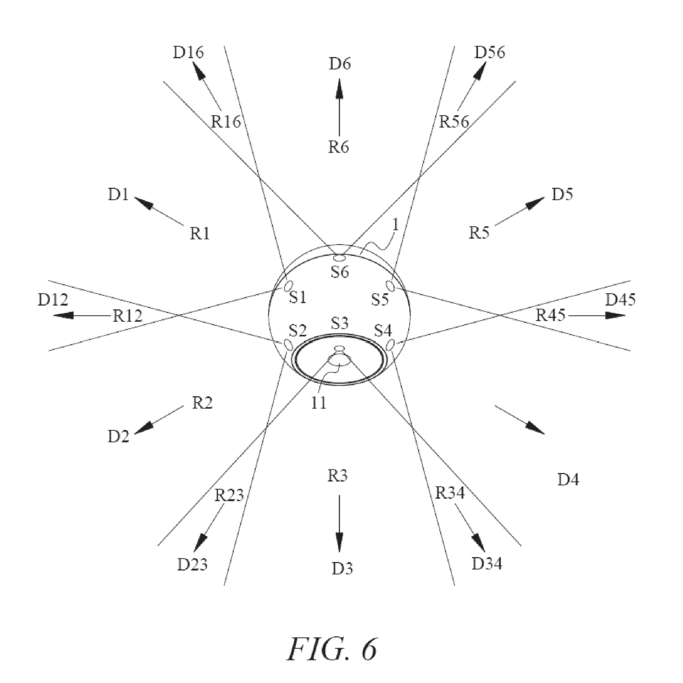

Please refer Fig. 4 to Fig. 6. Fig. 4 shows a perspective left view of the dynamic tracking device 1; Fig. 5 shows a perspective right view of the dynamic tracking device 1. In second embodiment, sensors 12 are respectively set on the first side 101 (shown in Fig. 4) and second side 102 (shown in Fig. 5) of video recording module 11. The sensors 12 are sequentially arranged as the S3, S4, S5 (shown in Fig 3), S1, and S2 (shown in Fig. 4). Fig. 6 shows a schematic diagram of sensing coverage and sensing direction of sensors 12. The sensing coverage is arranged as R1, R12, R2, R23, R3, R34, R4, R45, R5, R56, R6, and R16, respectively. Each sensing coverage is corresponding to the direction of D1, D12, D2, D23, D3, D34, D4, D45, D5, D56, D6, and D16, respectively. Once a detection signal is found, controller 13 will rotate itself to one of the directions between D1 and D16 based on the corresponding sensing coverage between R1 and R6.

The aforementioned operations can be tabulated in Table 1:

**Table 1**

| the sensor which provided sensing result | corresponding sensing coverage | corresponding camera rotation direction |
|---|---|---|
| S1 | R1 | D1 |
| S1+S2 | R12 | D12 |
| S2 | R2 | D2 |
| S2+S3 | R23 | D23 |
| S3 | R3 | D3 |
| S3+S4 | R34 | D34 |
| S4 | R4 | D4 |
| S4+S5 | R45 | D45 |
| S5 | R5 | D5 |
| S5+S6 | R56 | D56 |
| S6 | R6 | D6 |
| S6+S1 | R16 | D16 |

Sensors 12 also can be configured to spread on various surface locations of the dynamic tracking device 1 so as to form a three-dimension sensing coverage. However the sensor positions, dimensions, sizes, and coverage are not limited by aforementioned description.

The controller 13 further comprises a communications interface, and transmits sensing data provided by the sensor 23 and shooting image to the management-end device by the communications interface. Aforementioned communications interface can be wireline communications interface (e.g. coaxial cable interface, telephone cable interface, network cable interface, fiber cable interface) or wireless communications interface (e.g. all kind of mobile communications interface).

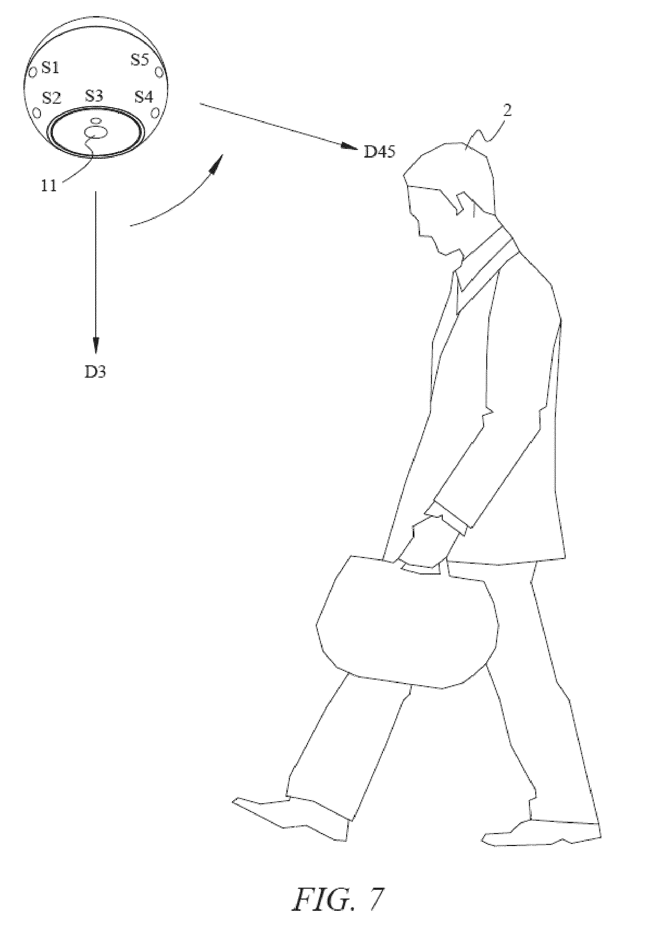

Fig. 7 shows an operating schematic diagram of the second embodiment. Assuming the default rotation direction of video recording module 11 of the dynamic tracking device 1 is D3, and when target 2 enters sensing range of the dynamic tracking device 1, the controller determines target 2's location at the direction of D45 by analyzing the sensing result provided by the sensor S4 and S5. Meanwhile, the controller 13 commands the rotating module 13 to rotate so as to position the rotation direction of the video recording module 11 to the D45, and enables the video recording module 13 to track target 2. In another embodiment, when there have a plurality of target 2 in the sensing range, the controller can prioritize tracking the first appearing target 2.

Controller 12 now guides the video recording module 11 to track the target 2 by following its movement until either target 2 stops or target 2 disappears. Once the tracking target 2 shows no movement, controller 13 will guide the rotating module 14 to position the video recording module 11 to the new location where the second target 2 is found by the feedback of the sensor 12.

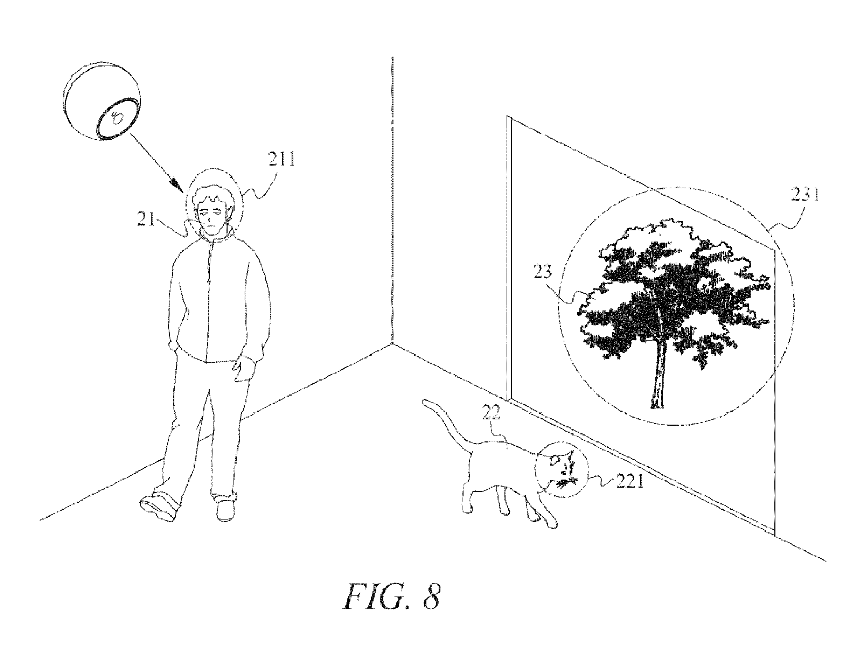

The present application further provides a third embodiment. The third embodiment is similar to the second embodiment; however the difference is that the controller 13 of the third embodiment further executes a characteristic recognition operation to the selected portion of the shooting image so as to identify the type (e.g. people, pet, or shaking background) of the target 2. With the acquired type, the controller 13 determines whether to take the dynamic tracking action on the target 2 according to the recognition results. Illustrated by Fig. 8, when there are person 21, pet 22, and tree 23 moved by wind in the monitored environment, the highest priority of tracking target parameter is set to person if a face characteristic can be recognized. The controller 13 executes a face image recognition operation (person face characteristic 211, pet face characteristic 221, tree characteristic: do not match face characteristic) after acquiring their images to determine person 21 satisfying a person face characteristic. Controller 13 executes a dynamic tracking operation on person 21 to avoid interferences caused by the background noise (pet 22, moving tree 23)

Present application further provides forth embodiment. The forth embodiment is similar to the third embodiment; however the difference is that the controller 13 of the forth embodiment further transmits the selected images to a local database system or a remote database system to perform recognition process and later acquires a feedback identification information. Controller 13 analyzes the feedback identification information from data systems and determines if a tracking operation is needed. This is useful as the device will not track owners but only possible intruders or unrecognized persons.

Controller 13 may have a local controlling interface or a remote controlling interface so as to provide configurations of the tracking priority and rules thereof. The tracking priority rules are shown in Table 2. The managing rule is not limited bv aforementioned description.

**Table 2**

| ID information | Stephen Curry | David Lee | unknown person |
|---|---|---|---|
| type information | company management | vendor | intruder |
| tracking priority | no tracking | low | high |
| tracking and recording parameters | rotating module speed setting: stop | rotating module speed setting: typical | rotating module speed setting: high |
| | video recording module: low resolution | Video recording module: typical resolution | Video recording module: high resolution |

Once controller 13 acquires ID information from local or remote systems, controller 13 will load and perform pre-programmed operations according to Table 2.

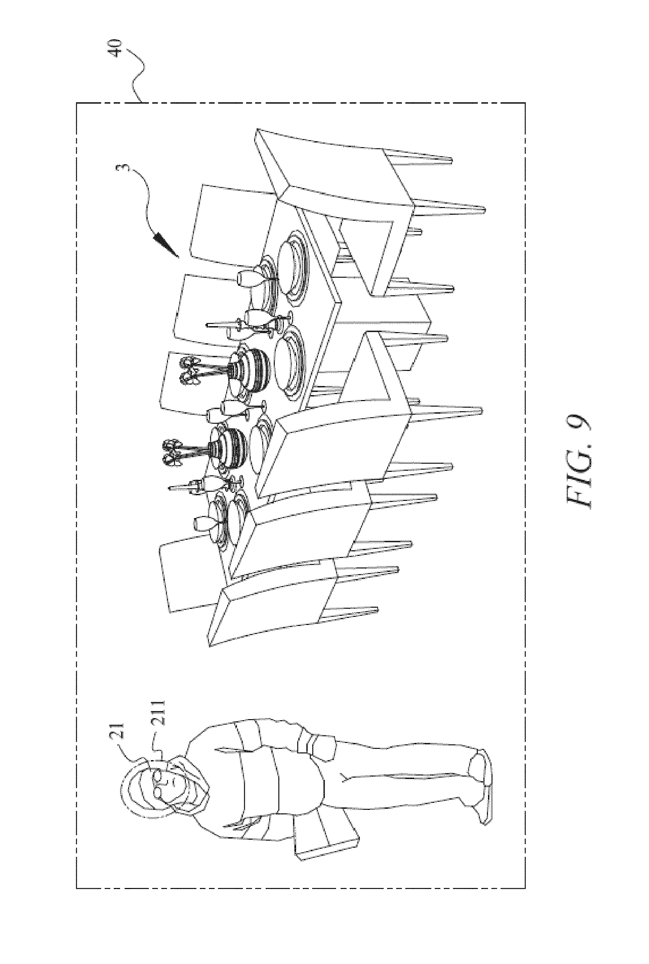

As an example, in Fig. 9, when the tracking device detects person 21, controller 13 transmits person's face images or face characteristic 211 to local database systems or remote database systems to inquiry and to acquire ID information of person 21. In this case, person 21's ID information is unknown. Person 21's class information is intruder, and the tracking priority is high. Furthermore, the rotating module 14 will perform high speed tracking and video tracking module 11 will execute high resolution recording.

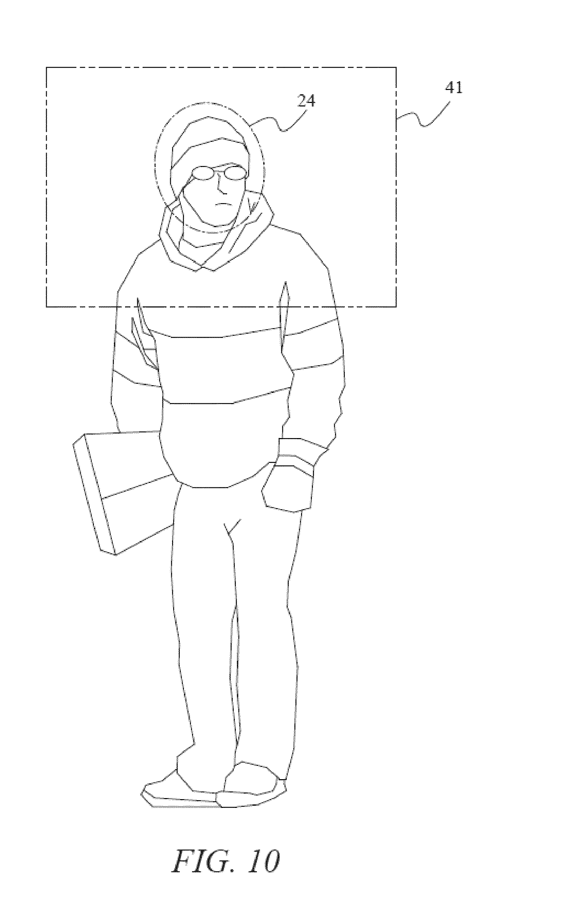

Present application further provides a fifth embodiment. The fifth embodiment is similar to the forth embodiment; however the difference is that the controller 13 of the fifth embodiment can automatically configure the image focus and the position of video recording module 11 after determining the selected area (e.g. face) of target 2 (e.g. person 21). Please refer to Fig. 9, the acquired initial image 40 has a broad viewing angle. The initial image 40 comprises image of person 21 and furniture 3. To acquire clearer face characteristic of person 21, the controller 13 recognizes the selected is face after acquiring the image, then the controller 13 configures the video recording module 11 to automatically re-focus on the chosen image 41 as shown in Fig. 10. The re-focus and zoom-in image 41 can provide clearer face characteristic 211 to process subsequent image recognition operations.

Present application further provides a sixth embodiment. The difference between sixth embodiment and aforementioned embodiment is that the sensors 12 of the dynamic tracking device 1 are audio sensors. The dynamic tracking device 1 is applied to a distance meeting environment where there are multiple persons in a local meeting environment. Controller 13 (set in the local meeting environment) acquires the ambient audio sources by analyzing the audio sensing results to determine the location of the speaking person. Controller 13 then guides rotating module 14 to turn to the direction of the speaking person so as to obtain the best audio reception. The remote end persons can then see and hear the speaking person.

Present application further provides seventh embodiment. The difference between seventh embodiment and aforementioned embodiment is that the sensors 12 of the seventh embodiment are smoke sensors and the dynamic tracking device 1 is applied to smoke alert. When there is a smoke detected in the monitored environment, controller 13 analyzes the sensing results to acquire the direction of smoke source of the monitored environment, and then sets to the direction of smoke source and generates an instant alert so as to provide managers to deal with the situation immediately.

The aforementioned video recording module 11 further comprises a video camera device and a controlling circuit thereof. The controller 13 is an electrical device having an operating ability such as computer devices, microprocessors, and programmable digital circuits, etc.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A dynamic tracking device , comprising:
a video recording module;
a plurality of sensors; and
a controller, configured a standalone embedded operation system with computation power and connected with the video recording module and the sensors, wherein the controller tracks moving object by comparing image pixel changes to determine the tracking direction, wherein the controller performs tracking task according to sensing results fed by at least one of the sensors to configure a rotation direction of the video recording module.

2. The device as claimed in claim 1, further comprising a rotating module connected with the controller, wherein the controller further commands the rotating module to rotate according to the rotation direction.

3. The device as claimed in claim 2, wherein the rotating module actively connects with the body of the dynamic tracking device so as to configure the rotation direction of the video recording module when the rotating module rotates the body.

4. The device as claimed in claim 1 further comprises a rotor electrically connected with the controller and actively connected with the video recording module so as to provide the rotor to turn the video recording module.

5. The device as claimed in claim 1, 2, 3 or 4, wherein the body of the dynamic tracking device further comprises at least one sensor mounted on each side of the body to provide a detection function.

6. The device as claimed in claim 1, wherein the sensors are mounted at least one on the same side of the video recording module.

7. The device as claimed in claim 5, wherein the body of the dynamic tracking device comprises a curved surface structure with at least one of the sensors mounted on the curved surface structure; or
wherein the body of the dynamic tracking device comprises a multiple plane structure, and at least one of the sensors is mounted on the multiple plane structure.

8. The device as claimed in claim 5, wherein the sensing coverage comprises at least one dimension.

9. The device as claimed in claim 1, wherein the sensors are selected from infrared sensors, audio sensors, smoke sensors, sonic sensors, or radio sensors, etc.

10. The device as claimed in claim 1, wherein the sensors are audio sensor, and the controller further analyzes the sensing results to acquire the direction of audio source of a monitored environment so as to configure the rotation direction of the video recording module.

11. The device as claimed in claim 1, wherein the sensors are smoke sensor, and the controller further analyzes the sensing result to acquire direction of smoke source of a monitored environment so as to configure the rotation direction of the video recording module; or
wherein the controller further acquires a video image of a target from the video recording module, the controller further analyzes the sensing results so as to acquire a new position of the target and enables the rotating module to turn to track the target.

12. The device as claimed in claim 11, wherein the controller further identifies a selected portion of the target from the image and determines whether configuring the rotating module so as to track the target.

13. The device as claimed in claim 12, wherein the controller further configures the video recording module to auto focus and to capture the selected portion of the target so as to provide a refocus image.

14. The device as claimed in claim 12, wherein the selected portion is a face portion.

15. The device as claimed in claim 12, wherein the controller further inquiries a piece of identification information according to the selected portion and executes a correlated tracking operation by an inquiring result.
